# EUROPEAN PATENT SPECIFICATION

(11) **EP 4 313 666 B1**
(45) Date of publication and mention of the grant of the patent: **21.10.2026**
(21) Application number: 22776563.3
(22) Date of filing: 23.03.2022
(51) Int. Cl.: B60L 50/64, F25D 17/02, F28D 9/00, F28D 21/00, H01M 10/6556, H01M 10/625, F28F 9/02, F28F 21/08, F28F 21/06, F28F 3/12, B29C 65/64, B29C 65/46, B29C 65/44, B29C 65/20, B29C 65/18, B29C 65/16, B23K 26/352, B29L 31/18, B29C 45/14

(54) **MANUFACTURE OF HEAT EXCHANGERS VIA HYBRID WELDING**
HERSTELLUNG VON WÄRMETAUSCHERN DURCH HYBRIDSCHWEISSEN
FABRICATION D'ÉCHANGEURS DE CHALEUR PAR SOUDAGE HYBRIDE

(30) Priority: 26.03.2021 US 202163166545 P; 19.01.2022 US 202217579277
(43) Date of publication of application: 07.02.2024
(73) Proprietor: Sogefi Air & Cooling USA, Inc., Rochester Hills, Michigan 48309 (US)
(72) Inventor: THOMPSON, Stephen, Rochester Hills, Michigan 48309 (US); DEMETRIO-SOEIRO, Nuno, Rochester Hills, Michigan 48309 (US); BECKER, Nicolas, Rochester Hills, Michigan 48309 (US)
(74) Representative: Grünecker Patent- und Rechtsanwälte PartG mbB
(86) International application number: PCT/US2022/021532
(87) International publication number: WO 2022/204273

(56) References cited:
- WO-A1-2019/069020
- WO-A1-2019/233956
- WO-A1-2020/027299
- CN-A- 107 283 067
- DE-A1- 102012 012 663
- FR-A1- 3 081 981
- US-A1- 2003 029 606
- US-A1- 2003 029 606
- US-A1- 2020 170 480
- US-B2- 10 062 935

## Description

### FIELD OF THE INVENTION

The present invention relates to the manufacture of heat exchangers for dissipating heat accumulating in battery cells and in other applications.

### BACKGROUND OF THE INVENTION

Heat exchangers, especially those involving fluids such as water, glycol-based liquids, oil, and air, are an indispensable and ubiquitous element of many mechanical, electrical, or hydraulic systems. For example, heat exchanger are commonly used in electrical vehicles to draw heat away from batteries having a high operating voltage. Lithium-ion battery cells in particular are known to generate significant heat during charging and discharging. For this reason, heat exchangers are typically placed in thermal communication with the battery cells to transfer heat to a suitable cooling fluid.

Metals such as steel, stainless steel, and aluminum have traditionally been used in the construction of heat exchangers, and in particular cooling plates. These materials can be welded, brazed, or mechanically assembled to form the necessary architecture of the heat exchanger. More recently, heat exchangers have included plastics. Plastics can be advantageous due to their ability to be easily molded into complex shapes, thereby reducing manufacturing costs as well as the weight of existing heat exchangers.

Due to the absence of chemical bonding between the metal and the plastic, however, the plastic is usually mechanically fastened to the metal portion, for example by crimping, riveting, or bolting the plastic portion to the metal substrate, usually with the addition of a gasket material at the interface to assure pressure leak tightness. However, there remains a continued need for an improved hybrid heat exchanger that leverages the benefits of metal and plastic materials without requiring mechanical fasteners or gasket materials and while maintaining a strong bond and the metal-plastic interface.

US 2020/170480 A1 discloses a method for manufacturing a single-chamber heat exchanger made of a plastic material, and which is laser-welded onto a surface structuring produced on an outer side of a metal container wall of a household appliance.

FR 3 081 981 A discloses a heat exchanger with several channels for a cooling fluid, which can be mounted onto one side of a metal plate, wherein on an opposite side of the metal plate there can be arranged a battery to be cooled.

It is the object of the present invention to provide a method for producing a heat exchanger, which achieves cost and weight advantages over existing designs.

The object can be solved with a method for manufacturing a heat exchanger according to claim 1. Improved embodiments of the present invention are provided by each of the dependent claims.

### SUMMARY OF THE INVENTION

A method for forming a hybrid heat exchanger is provided. The method includes laser-texturing a metal surface to create a plurality of microstructures and subsequently melt-bonding a plastic component to the plurality of microstructures· During melt-bonding, plastic material penetrates the plurality of microstructures and conforms the plastic component to the metal surface. After hardening within the microstructures, the plastic component adheres to the metal surface as a hybrid component. As a result, fasteners and snap connections are not required, and the plastic-metal joint provides a barrier to water, glycol-based fluids, air, oil, and other fluids.

In one embodiment, a method for forming a hybrid heat exchanger includes laser-texturing an upper surface of a metal substrate to form a plurality of undercut channels or surface structures. Laser-texturing can be performed via laser ablation techniques using a continuous wave laser or pulsed fiber laser to etch the metal substrate in successive passes. The undercut channels or surface structures can include a depth of between 5 pm and 200 pm, inclusive. The method then includes melt bonding an upper plastic housing to the metal substrate, optionally via hot-press welding, ultrasonic welding, laser welding or injection over-molding. During melt bonding, plastic flows into the plurality of undercut channels and hardens to non-removably join the upper plastic housing to the metal substrate. A battery module is then mounted to the metal substrate, optionally with a thermally conductive paste or film between the battery module and the metal substrate. Alternatively, a lower plastic housing can be joined to a lower surface of the metal substrate in an identical manner, the metal substrate providing a physical barrier between a first chamber and a second chamber. The upper and lower plastic housings can include polypropylene, polycarbonate, or polyamide, and the metal substrate can include aluminum, copper, steel, or alloys thereof.

In another embodiment, a hybrid heat exchanger is provided. The hybrid heat exchanger includes a plastic housing and a metal substrate that define a chamber for a thermal fluid. The metal substrate includes multiple micro-textured regions, formed by laser-texturing, the micro-textured regions including parallel or intersecting undercut channels with a depth of between 5 µm and 200 µm. The plastic housing includes a peripheral edge penetrating the undercut channels along the entire contact area or interface between the plastic housing and the metal substrate. A battery module is mounted to the metal substrate, optionally with a thermally conductive paste or film between the battery module and the metal substrate.

In still another embodiment, the hybrid heat exchanger includes a first chamber for a first thermal fluid and a second chamber for a second thermal fluid, the first and second chambers being separated by a metal substrate. An upper plastic housing includes a peripheral edge penetrating the undercut channels along the entire contact area or interface between the upper plastic housing and the metal substrate. Similarly, a lower plastic housing includes a peripheral edge penetrating the undercut channels along the entire contact area or interface between the lower plastic housing and the metal substrate.

The hybrid heat exchangers of these and other embodiments are suitable for use in combination with a wide variety of systems, including battery modules, radiators, and intercoolers. Because the hybrid heat exchangers include lightweight plastic materials and lack a seal gasket or fasteners, the hybrid heat exchangers achieve cost and weight advantages over existing designs. The control of the temperature of an associated battery module, radiator, or intercooler can be maintained within a predetermined range to optimize system performance, optionally with the aid of one or more temperature sensors. In very cold environments, the heat exchangers can also warm the associated system to achieve an operating temperature within the predetermined desired range.

These and other features of the invention will be more fully understood and appreciated by reference to the description of the embodiments and the drawings.

Before the embodiments of the invention are explained in detail, it is to be understood that the invention is not limited to the details of operation or to the details of construction and the arrangement of the components set forth in the following description or illustrated in the drawings. The invention may be implemented in various other embodiments and of being practiced or being carried out in alternative ways not expressly disclosed herein. In addition, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof. Further, enumeration may be used in the description of various embodiments. Unless otherwise expressly stated, the use of enumeration should not be construed as limiting the invention to any specific order or number of components. Nor should the use of enumeration be construed as excluding from the scope of the invention any additional steps or components that might be combined with or into the enumerated steps or components.

### BRIEF DESCRIPTION OF THE DRAWINGS

Figure 1 is a side view of a metal sheet having a plurality of undercut microstructures formed on an upper surface thereof.
Figure 2 are top and side views of a metal sheet having a plurality of undercut microstructures including parallel furrows formed with successive laser passes.
Figures 3 is a cross-sectional representation of a plastic housing and a metal sheet including a micro-textured upper surface.
Figure 4 is a cross-sectional representation of melt-bonding the plastic housing of Figure 3 to the metal sheet of Figure 3 in the manufacture of a heat exchanger.
Figure 5 is a cross-sectional representation of a heat exchanger including a first plastic component melt-bonded to a micro-textured metal sheet and a second plastic component melt-bonded to a micro-textured metal sheet.
Figure 6 is a cross-sectional representation of a heat exchanger joined to a multi-cell battery module.

### DETAILED DESCRIPTION OF THE CURRENT EMBODIMENT

As discussed herein, the current embodiment includes a method for manufacturing a hybrid heat exchanger. The method generally includes laser-texturing a metal surface to create microstructures therein, and subsequently melt-bonding a plastic component to the textured metal surface. The method is discussed in Part I below, with examples of a heat exchanger discussed in Part II below. While discussed below in connection with a battery heat exchanger, the present method is suitable for a wide range of applications, including heat exchangers for radiators and intercoolers.

### I. Method of Manufacture

As noted above, the method of the current embodiment includes laser-texturing a metal surface to create microstructures therein, and subsequently melt-bonding a plastic component to the textured metal surface. In the current embodiment, the metal surface is a metal sheet having a high thermal conductivity and low specific weight, for example aluminum, steel, copper, and alloys thereof. The metal surface is micro-textured via continuous-wave or pulsed fiber laser etching to form a region having undercut grooves or channels. As used herein, "micro-texturing" means the selective removal or melting of material from the surface of the metal sheet, resulting in channels, recesses, or grooves having an average depth of between 1 µm and 200 µm. For example, micro-texturing the metal sheet can include forming a region of undercut grooves or channels having an average depth of between 5 and 200 µm, inclusive.

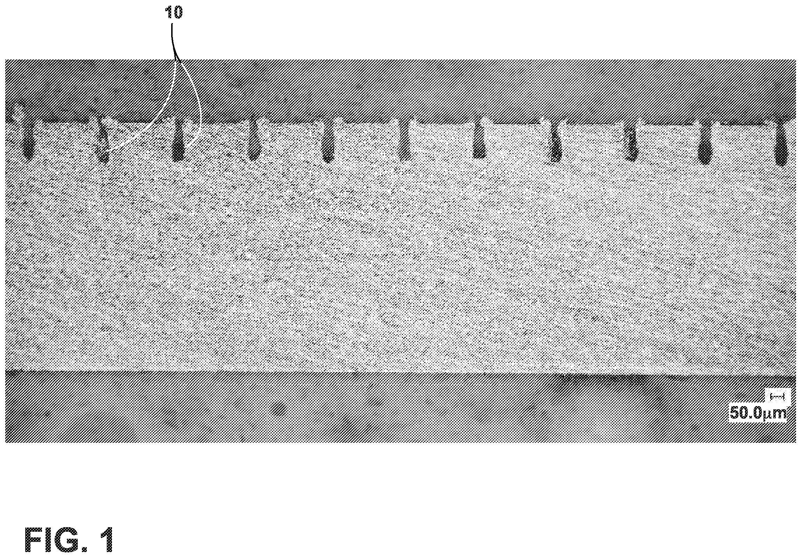

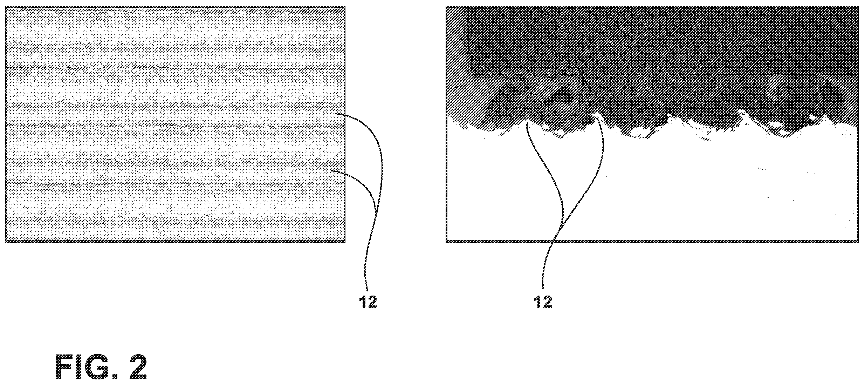

Micro-texturing can be performed via pulsed laser ablation or continuous-wave laser etching, by non-limiting example. Pulsed laser ablation can be performed using excimer lasers and solid-state lasers such as the Nd:YAG laser. Continuous-wave laser etching can be performed using a 1000 W laser with a 25-50 µm focal spot size. As shown in Figure 1, the undercut grooves or channels 10 may be spaced apart in parallel, such that no two channels 10 intersect. Alternatively, the undercut grooves or channels 10 may intersect each other, optionally in a quadrilateral arrangement. Forming the undercut grooves or channels is achieved with successive passes of the laser per groove or channel, optionally at least three passes per groove or channel. Undercut microstructures may also be created using successive lines of laser-generated melting to create furrows 12 with wavelike ripples, shown in Figure 2 for example.

Each groove or channel 10 includes an undercut, i.e., a width that increases in the depth-wise direction. For example, each undercut groove or channel can include a surface opening defining a width of approximately 20 µm, increasing to a maximum width of approximately 40 µm at an intermediate point between the surface opening and the base of the groove or channel. The undercut grooves or channels can be spaced apart from each other by between 100 µm and 400 µm, for example, while other spacings can be used in other embodiments. To prevent interactions between adjacent grooves or channels, the ratio of channel width (e.g., the width at the surface opening) to channel separation (e.g., the distance between the midpoint of adjacent surface openings) can be at least 1:5, further optionally at least 1:10. As discussed below, the undercut grooves or channels promote improved polymer-to-metal adhesion, which provides a strong bond and obviates the need for an intermediate gasket element or fasteners.

After forming a micro-textured region of the metal surface, the method includes melt-bonding a plastic component to the micro-textured region. This step can include hot-press welding the plastic component to the metal surface, injection over-molding the plastic component to the metal surface, or ultrasonically welding the plastic component to the metal surface, depending on the polymer selected for the given application. Hot-press welding includes heating a plastic surface and a metal surface until melting occurs, and concurrently or subsequently pushing the plastic surface and the metal surface together within a hot press. Heating can be performed according to any desired method, including laser heating, induction heating, hot plate heating, or more simply by conduction heating through the metal component. Interface pressures of between 1 MPa and 3 MPa can assure a pressure-tight weld. Injection over-molding includes overmolding the plastic component directly onto the micro-textured metal surface, such that molten plastic penetrates the undercut grooves and channels and cures under high pressures to conform to the metal surface. Ultrasonic welding includes the application of ultrasonic waves at the plastic-metal interface, resulting in localized heating of the interface. Compression forces are applied to allow bonding to occur, typically via a sonotrode tip and anvil. Ultrasonic welding can be used in applications where the plastic component is formed from ABS, PP, PA6, or PA66, though other plastics can also be used.

In the application of these joining techniques, plastic material penetrates the undercut grooves or channels and conforms to the metal surface against which it is contacted. After hardening inside the undercut grooves or channels, the plastic component and the metal component are now joined. As a result, a fastener or snap connection is not required, and the plastic component adheres to the metal surface as a hybrid component. The micro-textured interface provides a tortuous leak path seal, which provides a barrier to cooling fluids, for example water, glycol-based fluids, oil, and air. The plastic component can optionally include filler material within a polymer matrix. The filler material can include glass fibers, carbon fibers, graphite fibers, or carbon nanotubes, for example. The polymer matrix can include polypropylene, polycarbonate, and polyamide, for example. The filler can be present in the plastic component at 30% by weight or less, optionally as a uniform distribution of fibers or powders.

### II. Hybrid Heat Exchanger

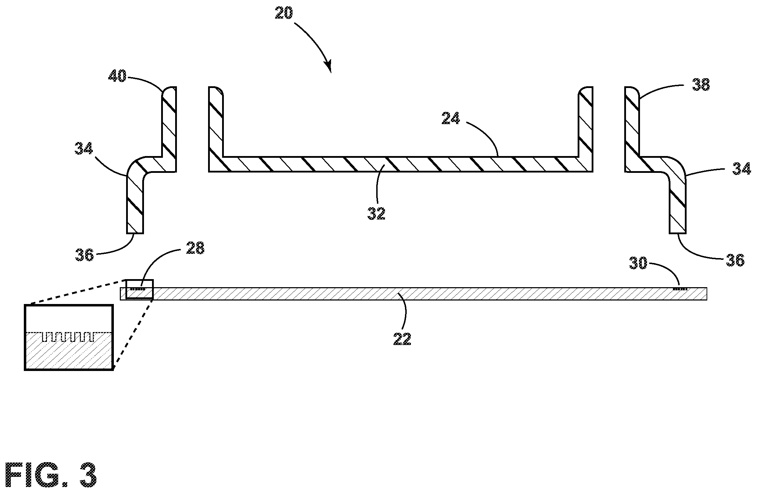

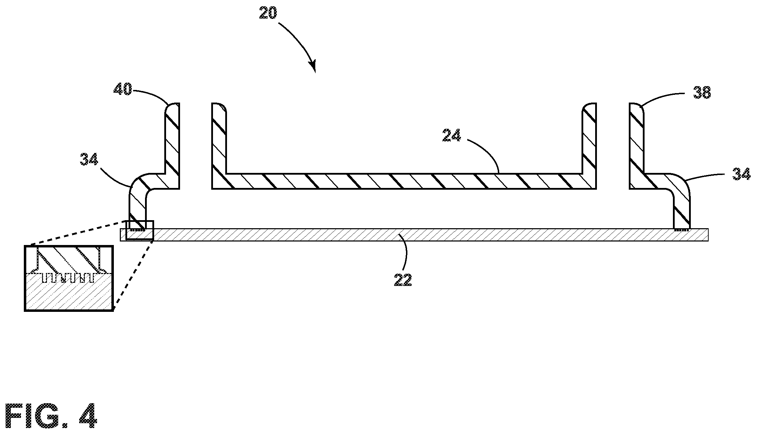

As one example, the present method can be applied in the manufacture of a heat exchanger. Referring now to Figures 3-5, the heat exchanger according to one embodiment is illustrated and generally designated 20. The heat exchanger 20 includes a metal plate 22, an upper plastic housing 24, and a lower plastic housing 26. The upper plastic housing 24 and the metal plate 22 cooperate to define a first flow passage for a first thermal fluid, and the lower plastic housing 26 and the metal plate 22 cooperate to define a second flow passage for a second thermal fluid. The second thermal fluid draws heat from the first thermal fluid through the metal plate 22, such that heat from a device (e.g., a battery module, radiator, or intercooler) is removed by indirect cooling so that the temperature of the device can be controlled.

As shown in Figure 3, an upper surface of the metal plate 22 is micro-textured to provide a region of undercut grooves or channels. The undercut grooves or channels are aligned such that no two channels intersect. The undercut grooves or channels are formed with successive passes (e.g., at least three passes) of a laser beam. A first micro-textured region 28 is formed along a first portion of the metal plate 22 and a second micro-textured region 30 is formed along a second portion of the metal cooling plate 22. The remaining portion of the upper surface of the metal cooling plate 22 does not receive surface treatment, but may include turbulators, cooling fins, or corrugations to increase the contact area of the metal plate 22 for the transfer of heating from the first thermal fluid to the second thermal fluid.

As also shown in Figure 3, the upper plastic housing 24 includes an end wall 32, a continuous sidewall 34 terminating at a peripheral edge 36, an inlet port 38 for the first thermal fluid, and an outlet port 40 for the first thermal fluid. The end wall 32 is spaced apart from the metal plate 22, and the sidewall 34 extends perpendicular from the end wall 32 for attachment to the metal plate 22. Following the surface treatment of the metal plate 22, the peripheral edge 36 of the continuous sidewall 34 is melt-bonded to the micro-textured regions 28, 30 of the metal plate 22. As noted above, this step can include hot-press welding the upper plastic housing 24 to the metal plate 22 or ultrasonically welding the upper plastic housing 24 to the metal plate 22. The plastic housing 24 can be pre-formed by any suitable method, including injection molding or press-molding. Alternatively, the upper plastic housing 24 can be overmolded directly onto the metal plate 22 using a multi-component die and injection molding system. After hardening, the plastic sidewall 34 and the metal plate 22 are fused together, providing a leak-tight barrier. A fastener or snap connection is not required, and the upper plastic housing 24 adheres to the metal plate 22 as a hybrid component.

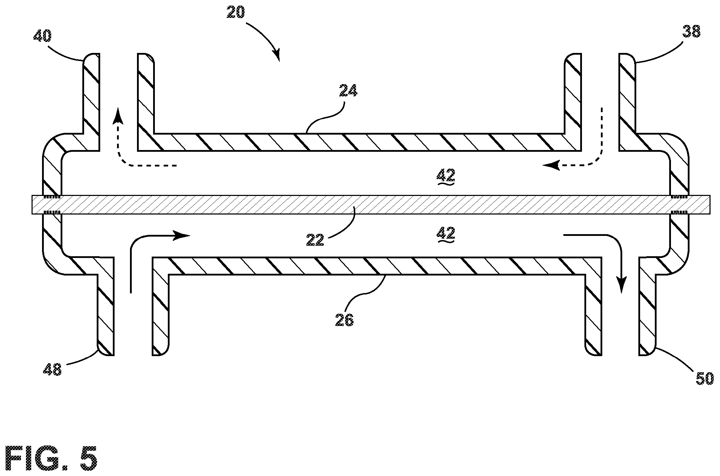

As shown in Figure 5, the lower plastic housing 26 is joined to the metal plate 22 in an identical manner, providing a heat exchanger 20 with a first chamber 42 and a second chamber 44 separated by the metal plate 12. The first thermal fluid circulates through the first chamber 42, transferring heat across the metal plate 22 to the second thermal fluid circulating through the second chamber 44. The second thermal fluid circulates through an inlet 48 and an outlet 50 defined by the lower plastic housing 26 to a cooling unit, which regulates the temperature of the second thermal fluid.

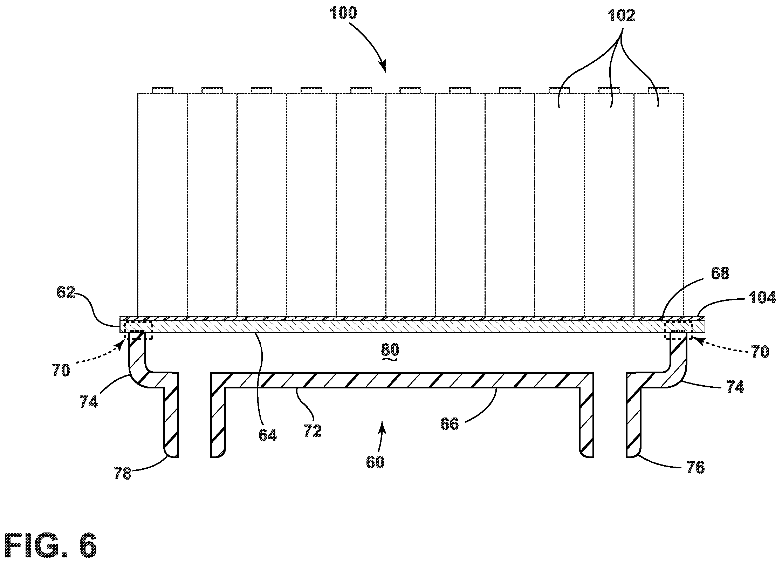

Referring now to Figure 6, a heat exchanger is illustrated and generally designated 60. The heat exchanger 60 shown in combination with a battery module 100, for example a multi-cell battery module for an electric vehicle. As shown in Figure 6, the heat exchanger 60 includes a metal substrate 62 having a first surface 64 joined to a plastic housing component 66 and having a second surface 68 in thermal contact with the battery module 100. The first surface 64 includes one or more micro-textured regions 70, the micro-textured regions 70 including a plurality of undercut channels, optionally with a depth of between 1 pm and 200 pm, inclusive. The plastic housing 66 includes an end wall 72, a continuous sidewall 74 terminating at a peripheral edge, an inlet port 76 for the thermal fluid, and an outlet port 78 for the thermal fluid. The end wall 72 is spaced apart from the metal substrate 62, and the sidewall 74 extends perpendicular from the end wall 72 for attachment to the metal substrate 62 in the manner described above. In particular, the peripheral edge of the continuous sidewall 74 is melt-bonded to the micro-textured regions 70 of the metal plate, such that plastic housing 66 and the metal substrate 62 are joined along a leak-tight seal (without a seal gasket or fasteners) and collectively define a chamber 80 for the thermal fluid. The second surface 68 of the metal substrate is in thermal contact with a plurality of battery cells 102 that comprise the battery module 100. A thermally conductive paste or film 104 is optionally between the plurality of battery cells 102 and the metal substrate 62 for improving the transfer of heat to the metal substrate 62.

As noted above, the heat exchanger 60 is suitable for use in combination with a battery module 100, and in particular a battery module for an electric vehicle. Because the heat exchanger 60 includes lightweight plastic materials and lacks a seal gasket and fasteners, the heat exchanger 60 achieves cost and weight advantages over existing designs. For example, a battery module 100 with a stack of battery cells 102 (each having a cathode plate, a separator, and an anode
plate) can be in thermal communication with one or more heat exchangers 60. As is known in the art, the battery cells 102 can be adjacent each other or stacked in predetermined intervals, such that adjacent battery cells are spaced apart from each other. The control of the temperature of the battery cells is maintained within a predetermined range to optimize the performance of the battery cells 102, optionally between 5°C and 50°C, with the aid of one or more temperature sensors. In extremely cold environments, however, the heat exchanger 60 can warm the battery cells 102 to achieve the temperature within the predetermined desired range.

## Claims

1. A method for manufacturing a heat exchanger (20), the method comprising:
laser-texturing a portion of a metal substrate (22) to form a plurality of microstructures therein, the plurality of microstructures including a plurality of undercut channels (10) that are spaced apart from each other along a portion thereof;
melt-bonding a plastic housing (24) to the laser-textured portion of the metal substrate (22), such that a molten portion of the plastic housing (24) flows into the plurality of undercut channels (10) defined in the metal substrate (22); and
permitting the molten portion of the plastic housing (24) to harden while within the plurality of undercut channels (10), thereby joining the plastic housing (24) to the metal substrate (22), wherein the plastic housing (24) and the metal substrate (22) define a flow chamber for a thermal fluid, and wherein the plastic housing (24) and the metal substrate (22) provide a leak barrier for the thermal fluid moving through the flow chamber, wherein the plastic housing (24) is a first plastic housing,
**characterized in that**
the method further including laser-texturing a further portion of the metal substrate (22) and melt-bonding a second plastic housing (26) thereto, wherein the first and second plastic housings (24, 26) are joined to opposing surfaces of the metal substrate (22).

2. The method of claim 1 wherein laser-texturing is performed via laser ablation or continuous wave laser etching.

3. The method of claim 1 wherein each of the plurality of undercut channels (10) are formed with at least three passes of laser energy.

4. The method of claim 1 wherein melt-bonding the plastic housing (24) includes hot-press welding or ultrasonic welding the plastic housing (24) to the metal substrate (22).

5. The method of claim 1 wherein melt-bonding the plastic housing (24) includes injection over-molding the plastic housing (24) to the metal substrate (22).

6. The method of claim 1 wherein the plurality of undercut channels (10) define an average depth of between 1 µm and 200 µm, inclusive.

7. The method of claim 1 wherein the plurality of undercut channels (10) define an average width of between 5 µm and 50 µm, inclusive.

8. The method of claim 1 wherein the plurality of undercut channels (10) are spaced apart from each other by between 100 µm and 400 µm, inclusive.

9. The method of claim 1 wherein the plurality of undercut channels (10) define a ratio of channel width to channel spacing of at least 1:5, the channel spacing being a distance separating adjacent ones of the plurality of channels (10).

10. The method of claim 1 wherein the metal substrate (22) includes aluminum, steel, copper, or alloys thereof.

11. The method of claim 1 wherein the plastic housing (24) includes polypropylene, polycarbonate, or polyamide.

12. The method of claim 1 wherein the plastic housing (24) includes a filler material dispersed within a polymer matrix.

13. The method of claim 12 wherein the filler material includes glass fibers, carbon fibers, graphite fibers, carbon nanotubes, or combinations thereof.

## Patentansprüche

1. Verfahren zum Herstellen eines Wärmetauschers (20), wobei das Verfahren umfasst:
Lasertexturieren eines Teils eines Metallsubstrats (22), um darin eine Vielzahl von Mikrostrukturen auszubilden, wobei die Vielzahl von Mikrostrukturen eine Vielzahl hinterschnittener Kanäle (10) einschließt, die entlang eines Teils derselben voneinander beabstandet sind;
Schmelzverbinden eines Kunststoffgehäuses (24) mit dem lasertexturierten Teil des Metallsubstrats (22) so, dass ein geschmolzener Teil des Kunststoffgehäuses (24) in die Vielzahl in dem Metallsubstrat (22) ausgebildeter hinterschnittener Kanäle (10) einströmt; und
Aushärtenlassen des geschmolzenen Teils des Kunststoffgehäuses (24), während dieser sich in der Vielzahl hinterschnittener Kanäle (10) befindet, wodurch das Kunststoffgehäuse (24) mit dem Metallsubstrat (22) verbunden wird, wobei das Kunststoffgehäuse (24) und das Metallsubstrat (22) eine Strömungskammer für ein Thermo-Fluid bilden, und wobei das Kunststoffgehäuse (24) und das Metallsubstrat (22) eine Leckagesperre für das sich durch die Strömungskammer bewegende Thermo-Fluid bereitstellen und das Kunststoffgehäuse (24) ein erstes Kunststoffgehäuse ist,
**dadurch gekennzeichnet, dass**
das Verfahren des Weiteren Lasertexturieren eines weiteren Teils des Metallsubstrats (22) sowie Schmelzverbinden eines zweiten Kunststoffgehäuses (26) mit diesem einschließt, wobei das erste und das zweite Kunststoffgehäuse (24, 26) mit gegenüberliegenden Flächen des Metallsubstrats (22) verbunden werden.

2. Verfahren nach Anspruch 1, wobei Lasertexturieren mittels Laserablation oder Dauerstrich-Laserätzen durchgeführt wird.

3. Verfahren nach Anspruch 1, wobei jeder der Vielzahl hinterschnittener Kanäle (10) mit wenigstens drei Durchgängen von Laserenergie gebildet wird.

4. Verfahren nach Anspruch 1, wobei Schmelzverbinden des Kunststoffgehäuses (24) Heißpressschweißen oder Ultraschallschweißen des Kunststoffgehäuses (24) an das Metallsubstrat (22) einschließt.

5. Verfahren nach Anspruch 1, wobei Schmelzverbinden des Kunststoffgehäuses (24) Anspritzen des Kunststoffgehäuses (24) an das Metallsubstrat (22) einschließt.

6. Verfahren nach Anspruch 1, wobei die Vielzahl hinterschnittener Kanäle (10) eine durchschnittliche Tiefe von einschließlich 1 µm bis einschließlich 200 µm aufweist.

7. Verfahren nach Anspruch 1, wobei die Vielzahl hinterschnittener Kanäle (10) eine durchschnittliche Tiefe von einschließlich 5 µm bis einschließlich 50 µm aufweist.

8. Verfahren nach Anspruch 1, wobei die Vielzahl hinterschnittener Kanäle (10) voneinander um von einschließlich 100 µm bis einschließlich 400 µm beabstandet sind.

9. Verfahren nach Anspruch 1, wobei die Vielzahl hinterschnittener Kanäle (10) ein Verhältnis von Kanalbreite zu Kanalabstand von wenigstens 1: 5 aufweist und der Kanalabstand ein Abstand ist, der benachbarte der Vielzahl von Kanälen (10) trennt.

10. Verfahren nach Anspruch 1, wobei das Metallsubstrat (22) Aluminium, Stahl, Kupfer oder Legierungen derselben enthält.

11. Verfahren nach Anspruch 1, wobei das Kunststoffgehäuse (24) Polypropylen, Polycarbonat oder Polyamid enthält.

12. Verfahren nach Anspruch 1, wobei das Kunststoffgehäuse (24) ein in einer Polymermatrix dispergiertes Füllmaterial enthält.

13. Verfahren nach Anspruch 12, wobei das Füllmaterial Glasfasern, Kohlenstofffasern, Graphitfasern, Kohlenstoff-Nanoröhrchen oder Kombinationen derselben enthält.

## Revendications

1. Procédé de fabrication d'un échangeur de chaleur (20), le procédé comprenant les étapes consistant à :
texturer au laser une partie d'un substrat métallique (22) afin de former à l'intérieur une pluralité de microstructures, la pluralité de microstructures comportant une pluralité de canaux évidés (10) qui sont espacés les uns des autres le long d'une partie de celles-ci ;
lier par fusion un boîtier en plastique (24) à la partie du substrat métallique (22) texturée au laser, de sorte qu'une partie fondue du boîtier en plastique (24) s'écoule dans la pluralité de canaux évidés (10) définis dans le substrat métallique (22) ; et
permettre à la partie fondue du boîtier en plastique (24) de durcir pendant qu'elle se trouve à l'intérieur de la pluralité de canaux évidés (10), assemblant ainsi le boîtier en plastique (24) au substrat métallique (22), dans lequel le boîtier en plastique (24) et le substrat métallique (22) définissent une chambre d'écoulement pour un fluide thermique, et dans lequel le boîtier en plastique (24) et le substrat métallique (22) constituent une barrière d'étanchéité pour le fluide thermique se déplaçant à travers la chambre d'écoulement, dans lequel le boîtier en plastique (24) est un premier boîtier en plastique,
**caractérisé en ce que**
le procédé comporte en outre la texturation au laser d'une autre partie du substrat métallique (22) e la liaison par fusion d'un second boîtier en plastique (26) à celle-ci, dans lequel les premier et second boîtiers en plastique (24, 26) sont assemblés à des surfaces opposées du substrat métallique (22).

2. Procédé selon la revendication 1, dans lequel la texturation au laser est réalisée par ablation laser ou par gravure laser à onde continue.

3. Procédé selon la revendication 1, dans lequel chacun de la pluralité de canaux évidés (10) est formé au moyen d'au moins trois passages d'énergie laser.

4. Procédé selon la revendication 1, dans lequel la liaison par fusion du boîtier en plastique (24) comporte le soudage par pressage à chaud ou le soudage par ultrasons du boîtier en plastique (24) au substrat métallique (22).

5. Procédé selon la revendication 1, dans lequel la liaison par fusion du boîtier en plastique (24) comporte un surmoulage par injection du premier boîtier en plastique (24) sur le substrat métallique (22).

6. Procédé selon la revendication 1, dans lequel la pluralité de canaux évidés (10) définissent une profondeur moyenne comprise entre 1 µm et 200 µm, inclus.

7. Procédé selon la revendication 1, dans lequel la pluralité de canaux évidés (10) définissent une largeur moyenne comprise entre 5 µm et 50 µm, inclus.

8. Procédé selon la revendication 1, dans lequel la pluralité de canaux évidés (10) sont espacés les uns des autres d'une distance comprise entre 100 µm et 400 µm, inclus.

9. Procédé selon la revendication 1, dans lequel la pluralité de canaux évidés (10) définissent un rapport entre largeur de canal et espacement de canal d'au moins 1:5, l'espacement de canal étant une distance séparant des canaux adjacents de la pluralité de canaux (10).

10. Procédé selon la revendication 1, dans lequel le substrat métallique (22) comporte de l'aluminium, de l'acier, du cuivre, ou des alliages de ceux-ci.

11. Procédé selon la revendication 1, dans lequel le boîtier en plastique (24) comporte du polypropylène, du polycarbonate, ou du polyamide.

12. Procédé selon la revendication 1, dans lequel le boîtier en plastique (24) comporte un matériau de charge dispersé au sein d'une matrice polymère.

13. Procédé selon la revendication 12, dans lequel le matériau de charge comporte des fibres de verre, des fibres de carbone, des fibres de graphite, des nanotubes de carbone, ou des combinaisons de ceux-ci.
